# EUROPÄISCHE PATENTSCHRIFT

(11) **EP 1 563 579 B1**
(45) Veröffentlichungstag und Bekanntmachung des Hinweises auf die Patenterteilung: **23.05.2007**
(21) Anmeldenummer: 03811341.1
(22) Anmeldetag: 24.07.2003
(51) Int. Cl.: H02B 1/04, H05K 5/00, G02B 6/42

(54) **GEHÄUSE ZUR AUFNAHME EINES ELEKTRISCHEN GERÄTES**
HOUSING FOR RECEIVING AN ELECTRICAL DEVICE
LOGEMENT CON U POUR ACCUEILLIR UN APPAREIL ELECTRIQUE

(30) Priorität: 18.11.2002 DE 10217773
(43) Veröffentlichungstag der Anmeldung: 17.08.2005
(73) Patentinhaber: Pepperl + Fuchs GmbH, 68307 Mannheim (DE)
(72) Erfinder: HELM, Wolfgang, 64625 Bensheim (DE); RUPPERT, Manfred, 67134 Birkenheide (DE); BERG, Eckhard, 67269 Grünstadt (DE)
(74) Vertreter: Heim, Hans-Karl
(86) Internationale Anmeldenummer: PCT/EP2003/008173
(87) Internationale Veröffentlichungsnummer: WO 2004/047246

(56) Entgegenhaltungen:
- DE-A- 3 918 874
- FR-A- 2 643 640
- US-A- 4 468 814

## Beschreibung

Die Erfindung betrifft ein Gehäuse zur Aufnahme eines elektrischen Geräts, insbesondere eines Schaltgerätes oder Sensors, mit mindestens einer Anzeigevorrichtung zur Anzeige verschiedener elektrischer Zustände, insbesondere Schaltzustände, des Geräts, nach dem Oberbegriff des Anspruchs 1.

Die Erfindung betrifft außerdem ein Gehäuse zur Aufnahme eines elektrischen Schaltgerätes oder Sensors mit einer Anzeigeeinrichtung zur Anzeige von verschiedenen elektrischen Schaltzuständen des elektrischen Schaltgerätes oder Sensors, welches Gehäuse im Wesentlichen quaderförmig oder kubisch geformt ist.

Es sind eine Vielzahl von Gehäusen zur Aufnahme von elektrischen Schaltgeräten oder Sensoren bekannt, welche Gehäuse Anzeigevorrichtungen zur Anzeige von verschiedenen elektrischen Schaltzuständen zur Überwachung des funktionsgerechten Arbeitens des elektrischen Schaltgerätes oder des Sensors aufweisen. Durch die DE 19512915 ist ein elektrisches Verbindungsteil mit elektrisch kontaktierenden Kontaktstiften oder - buchsen, wie Stecker oder Kupplung, bekannt geworden, welches ein Aufnahmeteil aufweist, in das ein Lichtleitkörper aus transmissivem Material mit mindestens einem Leuchtkörper eingesetzt ist und durch das Zuleitungen für die Kontaktstifte geführt sind, wobei der Lichtleitkörper Arme besitzt, die an ihren aneinanderstoßenden Enden auf der dem Leuchtkörper gegenüberliegenden Seite je eine in Richtung der Längsachse der Hauptstrahlungsrichtung des Leuchtkörpers ebengeneigte oder gekrümmte Oberfläche aufweisen, die jeweils die reflektierende Umlenkfläche des Armes bilden und die das Licht hauptsächlich in Achsrichtung innerhalb des jeweiligen Armes in einem Winkel zwischen zirka 40 bis 140 Grad, vorzugsweise rechtwinklig, zu dessen Hauptabstrahlungsrichtung umzulenken imstande sind, die reflektierenden Umlenkflächen der Arme jeweils in der Achse der Hauptstrahlungsrichtung des Leuchtkörpers in einer in den Lichtleitkörper weisenden Spitze oder Kante gemeinsam zusammenstoßen, wobei der Lichtleitkörper unterhalb der Spitze oder Kante eine Aussparung aufweist, in der der Leuchtkörper angeordnet ist.

Diese Vorrichtung, wie auch die Mehrzahl der bekannten derartigen Gehäuse besitzen den Nachteil, dass trotz einer Anzeige des Schaltzustandes des elektrischen Schaltgerätes oder des Sensors der Schaltzustand nicht aus allen Raumrichtungen gleichermaßen zu sehen ist, so dass unter Umständen ein Fehler oder eine Fehlfunktion des elektrischen Schaltgerätes oder des Sensors auftreten kann, ohne dass der Fehler von einer Bedienungsperson sofort gemerkt wird.

In FR 2.643 640 ist eine Näherungsschalter beschrieben, bei dem ein Leuchtmittel, wie beispielsweise eine Leuchtdiode in einem transparenten Abschlussstück untergebracht ist. Mit Hilfe dieses transparenten Abschlussstücks und einer dadurch erzielten Vielzahl von Reflexionen wird eine verbesserte Sichtbarkeit des Leuchtmittels erzielt.

Der Erfindung liegt die **Aufgabe** zugrunde, ein Gehäuse der eingangs genannten Gattung zu schaffen, bei dem die elektrischen Zustände, das heißt insbesondere die Schaltzustände , in besonders zuverlässiger Weise von einer Person überwacht werden können.

Diese Aufgabe wird durch ein Gehäuse mit den Merkmalen des Anspruchs 1 gelöst.

Erfindungsgemäß ist ein Gehäuse der oben angegebenen Art dadurch weitergebildet, dass jede Anzeigevorrichtung eine Mehrzahl von gleichfarbigen Leuchteinrichtungen aufweist und dass die Leuchteinrichtungen einer Anzeigevorrichtung an dem Gehäuse einander gegenüberliegend so angeordnet sind, dass von jeder Anzeigevorrichtung aus jeder Blickrichtung zumindest eine Leuchteinrichtung sichtbar ist.

Eine weitere Lösung besteht nach einem zweiten Aspekt der Erfindung darin, dass bei einem Gehäuse zur Aufnahme eines elektrischen Schaltgerätes oder Sensors der eingangs genannten Gattung zur Anzeige von unterschiedlichen Schaltzuständen des elektrischen Schaltgerätes oder Sensors das Gehäuse in denjenigen Ecken, welche jeweils auf derselben Raumdiagonale liegen, identische Anzeigeeinrichtungen angeordnet sind, wobei Anzeigeeinrichtungen auf unterschiedlichen Raumdiagonalen unterschiedlich sind, so dass aus jeder Blickrichtung auf das Gehäuse immer jeweils eine der Anzeigeeinrichtungen für jede der unterschiedlichen anzuzeigenden Schaltzustände des elektrischen Schaltgerätes oder Sensors sichtbar ist. Blickt man auf eine der Flächen des Gehäuses, so ist aufgrund dieser Anordnung eine Anzeigeeinrichtung aus jeder Raumrichtung sichtbar.

Ein wesentlicher Vorteil der Erfindung kann darin gesehen werden, dass die Anzeigeeinrichtung zur Anzeige von verschiedenen elektrischen Schaltzuständen bzw. Schaltstellungen bzw. Schaltzuständen des Schaltgerätes oder Sensors aus jeder Raumrichtung in eindeutiger Weise zu erkennen ist.

Sollen beispielsweise eine Power-On-Anzeige und ein weiterer, unterschiedlicher Funktions-Schaltzustand des elektrischen Schaltgerätes oder Sensors angezeigt werden, so weist das Gehäuse für eine erste Anzeige, zum Beispiel zur Power-On-Anzeige, sowie für eine weitere, unterschiedliche Anzeige, wie zur Anzeige eines Schaltzustandes des elektrischen Schaltgerätes oder Sensors, in jeweils zwei Ecken, welche jeweils auf derselben Raumdiagonale von zwei Raumdiagonalen liegen, identische Anzeigeeinrichtungen auf, wobei Anzeigeeinrichtungen auf unterschiedlichen Raumdiagonalen unterschiedlich sind, so dass aus jeder Blickrichtung auf das Gehäuse immer jeweils zwei der Anzeigeeinrichtungen unterschiedlicher Signalisation sichtbar sind, welche ein Anzeigepaar bilden, beispielsweise nämlich jeweils für Power-On und einen Funktions-Schaltzustand des elektrischen Schaltgerätes oder Sensors.

Sollen beispielsweise eine Power-On-Anzeige und zwei weitere, unterschiedliche Funktions-Schaltzustände des elektrischen Schaltgerätes oder Sensors angezeigt werden, so weist das Gehäuse für eine erste Anzeige, zum Beispiel zur Power-On-Anzeige, sowie für eine zweite Anzeige, wie zur Anzeige eines ersten Schaltzustandes, sowie für eine dritte Anzeige, wie zur Anzeige eines zweiten Schaltzustandes des elektrischen Schaltgerätes oder Sensors, in jeweils drei Ecken, welche jeweils auf derselben Raumdiagonale von drei Raumdiagonalen liegen, identische Anzeigeeinrichtungen auf, wobei Anzeigeeinrichtungen auf unterschiedlichen Raumdiagonalen unterschiedlich sind, so dass aus jeder Blickrichtung auf das Gehäuse immer jeweils drei der Anzeigeeinrichtungen unterschiedlicher Signalisation sichtbar sind, welche ein Anzeigetriple bilden, beispielsweise nämlich jeweils für Power-On und zwei unterschiedliche Funktions-Schaltzustände des elektrischen Schaltgerätes oder Sensors.

Sollen beispielsweise eine Power-On-Anzeige und drei weitere, unterschiedliche Funktions-Schaltzustände des elektrischen Schaltgerätes oder Sensors angezeigt werden, so weist das Gehäuse für eine erste Anzeige, zum Beispiel zur Power-On-Anzeige, sowie für eine zweite Anzeige, wie zur Anzeige eines ersten Schaltzustandes, sowie für eine dritte Anzeige, wie zur Anzeige eines zweiten Schaltzustandes, sowie für eine vierte Anzeige, wie zur Anzeige eines dritten Schaltzustandes des elektrischen Schaltgerätes oder Sensors, in jeweils vier Ecken, welche jeweils auf derselben Raumdiagonale von vier Raumdiagonalen liegen, identische Anzeigeeinrichtungen auf, wobei Anzeigeeinrichtungen auf unterschiedlichen Raumdiagonalen unterschiedlich sind, so dass aus jeder Blickrichtung auf das Gehäuse immer jeweils vier der Anzeigeeinrichtungen unterschiedlicher Signalisation sichtbar sind, welche ein Anzeigequadrupel bilden, beispielsweise nämlich jeweils für Power-On und drei unterschiedliche Funktions-Schaltzustände des elektrischen Schaltgerätes oder Sensors.

In weiterer Ausgestaltung können die Anzeigeeinrichtungen Glühbirnen oder Leuchtdioden sein, welche unterschiedlich farbiges Licht abgeben und dadurch unterscheidbar sind, wobei diejenigen Anzeigeeinrichtungen, welche auf derselben Raumdiagonale liegen, gleichfarbiges Licht abgeben, jedoch diejenigen Anzeigeeinrichtungen, welche auf unterschiedlichen Raumdiagonalen liegen, unterschiedlich farbiges Licht abgeben.

In weiterer Ausgestaltung der Erfindung befinden sich innerhalb des Gehäuses in denjenigen Ecken, in welchen Anzeigeeinrichtungen angeordnet sind, Sichtfenster, hinter denen jeweils eine Leuchtdiode oder Glühbirne angeordnet ist.

Die Anzeigeeinrichtung oder eine Mehrzahl von Anzeigeeinrichtungen sind somit immer aus allen Raumrichtungen zu erkennen, weil die Bedienungsperson beim Anblick einer oder mehrerer der Begrenzungsflächen des würfelförmigen oder quaderförmigen Gehäuses bei Vorhandensein nur einer Funktions-Anzeigeeinrichtung immer eine der beiden Anzeigeeinrichtungen zu sehen imstande ist. In diesem Fall kann zum Beispiel nur Power-On oder Power-Not-On unterschieden werden.

Weist das Gerät zwei unterschiedliche Funktions-Anzeigeeinrichtungen auf, so bilden diese ein Anzeigepaar, beispielsweise Power-On und Power-Not-On sowie Schaltzustand-s und. Schaltzustand-Not-s, wobei wiederum jeweils ein Anzeigepaar aus jeder Raumrichtung erblickt und durch die unterschiedliche Signalisation, wie unterschiedliches farbiges Licht, unterschieden werden kann.

Weist das Gerät drei unterschiedliche Funktions-Anzeigeeinrichtungen auf, so bilden diese ein Anzeigetriple, beispielsweise Power-On und Power-Not-On, Schaltzustand-s und Schaltzustand-Not-s sowie Schaltzustand-t und Schaltzustand-Not-t, wobei wiederum jeweils ein Anzeigetriple aus jeder Raumrichtung erblickt und durch die unterschiedliche Signalisation, wie unterschiedliches farbiges Licht, unterschieden werden kann.

Weist das Gerät vier unterschiedliche Funktions-Anzeigeeinrichtungen auf, so bilden diese ein Anzeigequadrupel, beispielsweise Power-On und Power-Not-On, Schaltzustand-s und Schaltzustand-Not-s, Schaltzustand-t und Schaltzustand-Not-t sowie Schaltzustand-r und Schaltzustand-Not-r, wobei wiederum jeweils ein Anzeigequadrupel aus jeder Raumrichtung erblickt und durch die unterschiedliche Signalisation, wie unterschiedliches farbiges Licht, unterschieden werden kann.

Ein Beispiel der Erfindung ist in der Zeichnung dargestellt, in welcher zeigen:
- Figur 1: eine perspektivische Ansicht eines würfelförmigen Gehäuses zur Aufnahme eines elektrischen Schaltgerätes oder Sensors, wobei das Gehäuse zwei unterschiedliche Funktions-Anzeigeeinrichtungen aufweist, welche je zusammen ein Anzeigepaar bilden und
- Figur 2: eine um 180 Grad gedrehte Ansicht des würfelförmigen Gehäuses der Figur 1 zur gemeinsamen Darstellung, dass immer ein Anzeige- paar unterschiedlicher Funktionsanzeigen aus jeder Raumrichtung sichtbar ist.

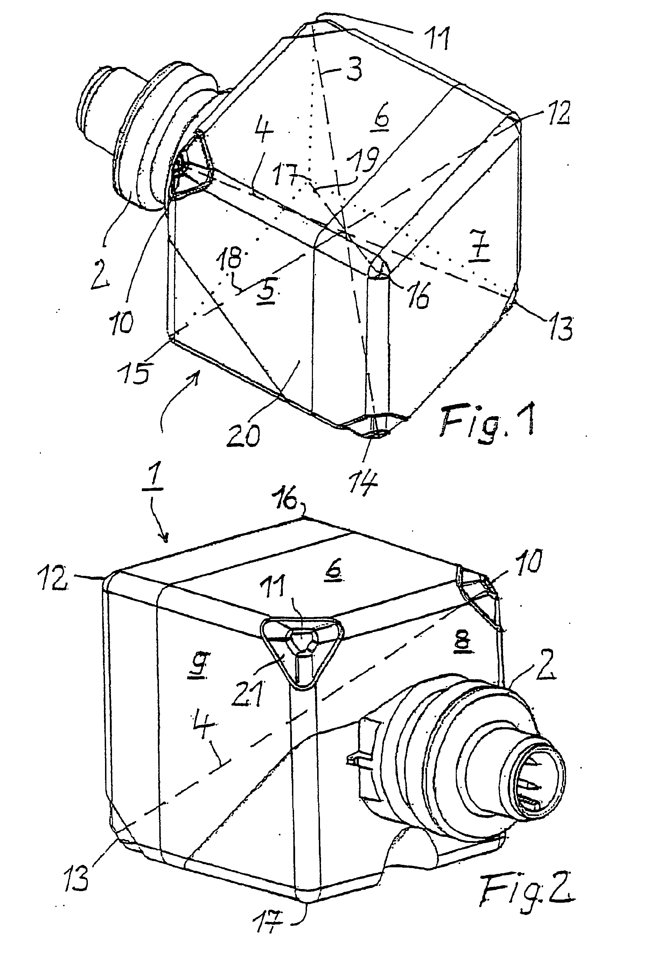

Das in den Figuren 1 und 2 gezeigte Gehäuse 1 ist ein Würfel, welcher durch seine Begrenzungsflächen 5, 6, 7, 8, 9 und 20 begrenzt ist und die Ecken 10, 11, 12, 13, 14, 15, 16 und 17 aufweist. Zwischen den Ecken 10-13, 11-14, 12-15 und 16-17 erstrecken sich jeweils die Raumdiagonalen 4, 3, 18 und 19. Auf der Begrenzungsfläche 8 erhebt sich ein Befestigungsflansch 2, welcher beispielsweise dazu dient, das Gehäuse 1 an einen nicht gezeigten Befestigungssockel anzuflanschen, welcher dazu eine geeignete Öffnung zur Aufnahme des Befestigungsflansches 2 aufweist.

Das in den Figuren 1 und 2 gezeigte Gehäuse 1 ist ein solches, welches zwei unterschiedliche Schaltzustände anzuzeigen imstande ist; beispielsweise dient das Gehäuse 1 zur Power-On-Anzeige und zur Anzeige eines weiteren Schaltzustandes des elektrischen Schaltgerätes oder Sensors. Dazu weist das Gehäuse 1 in jeweils zwei Ecken 10-13, welche auf derselben Raumdiagonale 4 liegen, eine Anzeigevorrichtung mit zwei identischen Anzeigeeinrichtungen 10 und 13 auf. Des Weiteren weist das Gehäuse 1 in den zwei Ecken 11-14, welche auf derselben Raumdiagonale 4 liegen, eine weitere Anzeigenvorrichtung mit zwei ebenfalls identischen Anzeigeeinrichtungen 11 und 14 auf, wobei allerdings die Anzeigeeinrichtungen auf den unterschiedlichen Raumdiagonalen 3 und 4 unterschiedlich sind, so dass sie unterschieden werden können. Damit bilden direkt benachbarte Anzeigeeinrichtungen 10-11 und 13-14 je ein Anzeigepaar unterschiedlicher Signalisation von Zuständen, wobei von den beiden Anzeigepaaren 10-11 bzw. 13-14 immer ein Anzeigepaar 10-11 oder 13-14 aus jeder Blickrichtung auf das Gehäuse 1 zu sehen ist.

Ein Anzeigepaar von Anzeigeeinrichtungen kann zum Beispiel aus unterschiedlichen Leuchtdioden 10, 11, 13, 14 bestehen, wobei die sich diagonal gegenüber liegenden Leuchtdioden 10, 13 in den sich diagonal gegenüberliegenden Ecken 10, 13 des Gehäuses 1 zum Beispiel Licht im roten Spektrum abstrahlen. Die sich diagonal gegenüber liegenden Leuchtdioden 11, 14 in den sich diagonal gegenüberliegenden Ecken 11, 14 strahlen hingegen Licht im grünen Spektrum ab, so dass auf diese Weise die unterschiedlichen Funktionszustände des elektrischen Schaltgerätes oder Sensors innerhalb des Gehäuses 1 unterschieden werden können.

Aus Figur 2 ist des Weiteren ersichtlich, dass jede Ecke, in welcher sich eine Anzeigeeinrichtung befindet, wie in der Ecke 11 die Anzeigeeinrichtung 11, mit einem transluziden Sichtfenster 21 abgedeckt ist, hinter welchem sich die Anzeigeeinrichtung in Form einer Leuchtdiode 11 befindet.

### Liste der Bezugszeichen:

- 1: würfelförmiges Gehäuse
- 2: Befestigungsflansch
- 3, 4, 18, 19: Raumdiagonale
- 5, 6, 7, 8, 9: Deckflächen des Gehäuses
- 10, 11, 13, 14: Anzeigeeinrichtungen und gleichzeitig Ecken des Gehäuses
- 15, 16, 17: übrige Ecken des Gehäuses
- 21: transluzides Sichtfenster

## Patentansprüche

1. Gehäuse (1) zur Aufnahme eines elektrischen Geräts, insbesondere eines Schaltgeräts oder Sensors,
mit mindestens einer Anzeigevorrichtung zur Anzeige verschiedener elektrischer Zustände, insbesondere Schaltzustände, des Geräts,
**dadurch gekennzeichnet,**
**dass** das Gehäuse im Wesentlichen kubisch oder quaderförmig ausgebildet ist,
**dass** jede Anzeigevorrichtung eine Mehrzahl von gleichfarbigen Leuchteinrichtungen (10, 11, 13, 14) aufweist und
**dass** die Leuchteinrichtungen (10, 13; 11, 14) einer Anzeigevorrichtung an dem Gehäuse (1) jeweils auf derselben Raumdiagonale (3, 4, 18, 19) an gegenüberliegenden Ecken angeordnet sind, so dass von jeder Anzeigevorrichtung aus jeder Blickrichtung zumindest eine Leuchteinrichtung (10, 11, 13, 14) sichtbar ist.

2. Gehäuse nach Anspruch 1,
**dadurch gekennzeichnet,**
**dass** in denjenigen Ecken (10-17), welche jeweils auf derselben Raumdiagonale (3, 4, 18, 19) liegen, identische Leuchteinrichtungen (10-13, 11-14) angeordnet sind, wobei Leuchteinrichtungen (10, 11, 13, 14) auf unterschiedlichen Raumdiagonalen (3, 4, 18, 19) unterschiedlich sind, so dass aus jeder Blickrichtung auf das Gehäuse (1) immer jeweils eine der Leuchteinrichtungen (10, 11, 13, 14) für jeden der unterschiedlichen anzuzeigenden Schaltzustände des elektrischen Geräts sichtbar ist.

3. Gehäuse nach Anspruch 1 oder 2,
**dadurch gekennzeichnet,**
**dass** für eine erste Anzeige, zum Beispiel zur Power-On-Anzeige, sowie für eine zweite Anzeige, wie zur Anzeige eines weiteren Schaltzustandes, des elektrischen Schaltgerätes oder Sensors das Gehäuse (1) in jeweils zwei Ecken (10, 11, 12, 13, 14, 15, 16, 17), welche jeweils auf derselben Raumdiagonale (3,4) von zwei Raumdiagonalen (3, 4) liegen, identische Anzeigeeinrichtungen (10-13, 11-14) aufweist, wobei Anzeigeeinrichtungen (10, 11, 13, 14) auf unterschiedlichen Raumdiagonalen (3, 4, 18) unterschiedlich sind, so dass aus jeder Blickrichtung auf das Gehäuse (1) immer jeweils zwei der Anzeigeeinrichtungen (10, 11, 13, 14) unterschiedlicher Signalisation sichtbar sind, welche ein Anzeigepaar bilden, beispielsweise nämlich jeweils für Power-On und einen Funktions-Schaltzustand des elektrischen Schaltgerätes oder Sensors.

4. Gehäuse nach einem der Ansprüche 1 bis 3,
**dadurch gekennzeichnet,**
**dass** für eine erste Anzeige, zum Beispiel zur Power-On-Anzeige, sowie für eine zweite Anzeige, wie zur Anzeige eines ersten Schaltzustandes, sowie für eine dritte Anzeige, wie zur Anzeige eines zweiten Schaltzustandes, des elektrischen Schaltgerätes oder Sensors das Gehäuse (1) in jeweils drei Ecken (10, 11, 12, 13, 14, 15, 16, 17), welche jeweils auf derselben Raumdiagonale (3, 4, 18) von drei Raumdiagonalen (3, 4, 18) liegen, identische Anzeigeeinrichtungen (10-13, 11-14) aufweist, wobei Anzeigeeinrichtungen (10, 11, 13, 14) auf unterschiedlichen Raumdiagonalen (3, 4, 18) unterschiedlich sind, so dass aus jeder Blickrichtung auf das Gehäuse (1) immer jeweils drei der Anzeigeeinrichtungen (10, 11, 13, 14) unterschiedlicher Signalisation sichtbar sind, welche ein Anzeigetriple bilden, beispielsweise nämlich jeweils für Power-On und zwei unterschiedliche Funktions-Schaltzustände des elektrischen Schaltgerätes oder Sensors.

5. Gehäuse nach einem der Ansprüche 1 bis 4,
**dadurch gekennzeichnet,**
**dass** für eine erste Anzeige, zum Beispiel zur Power-On-Anzeige, sowie für eine zweite Anzeige, wie zur Anzeige eines ersten Schaltzustandes, sowie für eine dritte Anzeige, wie zur Anzeige eines zweiten Schaltzustandes, sowie für eine vierte Anzeige, wie zur Anzeige eines dritten Schaltzustandes, des elektrischen Schaltgerätes oder Sensors das Gehäuse (1) in jeweils vier Ecken (10, 11, 12, 13, 14, 15, 16, 17), welche jeweils auf derselben Raumdiagonale (3, 4, 18) von vier Raumdiagonalen (3, 4, 18) liegen, identische Anzeigeeinrichtungen (10-13, 11-14) aufweist, wobei Anzeigeeinrichtungen (10, 11, 13, 14) auf unterschiedlichen Raumdiagonalen (3, 4, 18) unterschiedlich sind, so dass aus jeder Blickrichtung auf das Gehäuse (1) immer jeweils vier der Anzeigeeinrichtungen (10, 11, 13, 14) unterschiedlicher Signalisation sichtbar sind, welche ein Anzeigequadrupel bilden, beispielsweise nämlich jeweils für Power-On und drei unterschiedliche Funktions-Schaltzustände des elektrischen Schaltgerätes oder Sensors.

6. Gehäuse nach einem der vorherigen Ansprüche,
**dadurch gekennzeichnet,**
**dass** die Anzeigeeinrichtungen (10-13, 11-14) Glühbirnen oder Leuchtdioden sind, welche unterschiedlich farbiges Licht abgeben und **dadurch** unterscheidbar sind, wobei diejenigen Anzeigeeinrichtungen (10-13, 11-14), welche auf derselben Raumdiagonale (3, 4) liegen, gleichfarbiges Licht abgeben, jedoch diejenigen Anzeigeeinrichtungen (10-13, 11-14), welche auf unterschiedlichen Raumdiagonalen (3, 4) liegen, unterschiedlich farbiges Licht abgeben.

7. Gehäuse nach einem der vorherigen Ansprüche,
**dadurch gekennzeichnet,**
**dass** innerhalb des Gehäuses (1) in denjenigen Ecken (10, 11, 12, 13, 14, 15, 16, 17), in welchen Anzeigeeinrichtungen (10-13, 11-14) angeordnet sind, sich transluzide Sichtfenster befinden, hinter denen jeweils eine Leuchtdiode (10-13, 11-14) oder Glühbirne angeordnet ist.

## Claims

1. Casing (1) for receiving an electrical device, particularly a switching device or sensor,
having at least one indicating apparatus for indicating different electrical states, particularly switching states, of the device,
**characterized in that**
the casing is formed substantially cubic or cuboid
**that** each indicating apparatus has a plurality of isochromatic lighting devices (10, 11, 13, 14) and
**that** the lighting devices (10, 13; 11, 14) of an indicating apparatus on the casing (1) are in each case located on facing corners on the same space diagonal (3, 4, 18, 19), so that, from each viewing direction, at least one lighting device (10, 11, 13, 14) of each indicating apparatus is visible.

2. Casing (1) according to claim 1,
**characterized in that**
identical lighting devices (10-13, 11-14) are positioned in those corners (10 - 17) which are in each case located on the same space diagonal (3, 4, 18, 19), the lighting devices (10, 11, 13, 14) on different space diagonals (3, 4, 18, 19) differing, so that from each viewing direction on the casing (1) in each case always one of the lighting devices (10, 11, 13, 14) for each of the different switching states to be indicated of the electrical switching device or sensor is visible.

3. Casing according to claim 1 or 2,
**characterized in that**
for a first indication, e.g. for power-on indication, as well as for a second indication, such as for indicating a further switching state of the electrical switching device or sensor, the casing (1) has in in each case two corners (10, 11, 12, 13, 14, 15, 16, 17), which are in each case located on the same space diagonal (3, 4) of two space diagonals (3, 4), identical indicating devices (10-13, 11-14), the indicating devices (10, 11, 13, 14) on different space diagonals (3, 4, 18) differing, so that from each viewing direction on the casing (1) in each case always two of the indicating devices (10, 11, 13, 14) with different signalling are visible, which form an indication pair, e.g. namely in each case for power-on and a function switching state of the electrical switching device or sensor.

4. Casing according to one of the claims 1 to 3,
**characterized in that**
for a first indication, e.g. for power-on indication, as well as for a second indication, such as for indicating a first switching state, as well as for a third indication, such as for indicating a second switching state of the electrical switching device or sensor, the casing (1) has in in each case two corners (10, 11, 12, 13, 14, 15, 16, 17), which are in each case located on the same space diagonal (3, 4, 18) of three space diagonals (3, 4, 18), identical indicating devices (10-13, 11-14), the indicating devices (10, 11, 13, 14) on different space diagonals (3, 4, 18) differing, so that from each viewing direction on the casing (1) in each case always three of the indicating devices (10, 11, 13, 14) with different signalling are visible, which form an indication triple, e.g. namely in each case for power-on and two different function switching states of the electrical switching device or sensor.

5. Casing according to one of the claims 1 to 4,
**characterized in that**
for a first indication, e.g. for power-on indication, as well as for a second indication, such as for indicating a first switching state, as well as for a third indication, such as for indicating a second switching state, as well as for a fourth indication, such as for indicating a third switching state of the electrical switching device or sensor, the casing (1) has in in each case two corners (10, 11, 12, 13, 14, 15, 16, 17), which are in each case located on the same space diagonal (3, 4, 18) of four space diagonals (3, 4, 18), identical indicating devices (10-13, 11-14), the indicating devices (10, 11, 13, 14) on different space diagonals (3, 4, 18) differing, so that from each viewing direction on the casing (1) in each case always four of the indicating devices (10, 11, 13, 14) with different signalling are visible, which form an indication quadruple, e.g. for power-on and three different function switching states of the electrical switching device or sensor.

6. Casing according to one of the preceding claims,
**characterized in that**
the indicating devices (10-13, 11-14) are incandescent lamps or light emitting diodes, which emit light in different colours and which can consequently be differentiated, those indicating devices (10-13, 11-14) located on the same space diagonal (3, 4) emitting isochromatic light, whereas those indicating devices (10-13, 11-14) located on different space diagonals (3, 4) emitting differently coloured light.

7. Casing according to one of the preceding claims,
**characterized in that**
within the casing (1), in those corners (10, 11, 12, 13, 14, 15, 16, 17) in which indicating devices (10-13, 11-14) are located, translucent viewing windows are provided and behind which is in each case positioned a light emitting diode (10-13, 11-14) or incandescent lamp.

## Revendications

1. Boîtier (1) destiné à recevoir un appareil électrique, en particulier un appareil de commutation ou un capteur,
avec au moins un dispositif d'affichage pour indiquer différents états électriques de l'appareil, en particulier des états de commutation,
***caractérisé en ce que***
le boîtier est réalisé pour l'essentiel cubique ou parallélépipédique,
***en ce que*** chaque dispositif d'affichage comprend une pluralité de dispositifs lumineux (10, 11, 13, 14) de même couleur et
***en ce que*** les dispositifs d'affichage (10, 13 ; 11, 14) d'un dispositif d'affichage sont placés sur le boîtier (1) chacun dans des coins opposés sur la même diagonale (3, 4, 18, 19) de l'espace, de telle sorte que, pour chaque dispositif d'affichage, au moins un dispositif lumineux (10, 11, 13, 14) est visible dans chaque direction.

2. Boîtier selon la revendication 1,
***caractérisé en ce que***
dans les coins (10-17) qui se trouvent sur la même diagonale (3, 4, 18, 19) de l'espace, sont placés des dispositifs lumineux identiques (10-13, 11-14), les dispositifs lumineux (10, 11, 13, 14) de diagonales (3, 4, 18, 19) de l'espace différentes étant différents, de telle sorte que dans chaque direction d'observation du boîtier (1), l'un des dispositifs lumineux (10, 11, 13, 14) est toujours visible pour chacun des états de commutation différents de l'appareil électrique devant être affichés.

3. Boîtier selon la revendication 1 ou 2,
***caractérisé en ce que***
pour un premier affichage, par exemple pour l'affichage de mise sous tension, ainsi que pour un deuxième affichage, comme l'affichage d'un autre état de commutation de l'appareil de commutation électrique ou du capteur, le boîtier (1) comprend des dispositifs d'affichage identiques (10-13, 11-14) dans deux coins (10, 11, 12, 13, 14, 15, 16, 17) qui se trouvent sur la même diagonale (3, 4) de deux diagonales (3, 4) de l'espace, les dispositifs d'affichage (10, 11, 13, 14) de diagonales (3, 4, 18) de l'espace différentes étant différents, de telle sorte que, dans chaque direction d'observation du boîtier (1), deux des dispositifs d'affichage (10, 11, 13, 14) de signalisation différente sont toujours visibles, qui forment un couple d'affichage, par exemple pour la mise sous tension et un état fonctionnel de commutation de l'appareil électrique de commutation ou du capteur.

4. Boîtier selon l'une quelconque des revendications 1 à 3,
***caractérisé en ce que***
pour un premier affichage, par exemple pour l'affichage de mise sous tension, ainsi que pour un deuxième affichage, comme l'affichage d'un premier état de commutation, et pour un troisième affichage, comme l'affichage d'un deuxième état de commutation de l'appareil de commutation électrique ou du capteur, le boîtier (1) comprend des dispositifs d'affichage identiques (10-13, 11-14) dans deux coins (10, 11, 12, 13, 14, 15, 16, 17) qui se trouvent sur la même diagonale (3, 4, 18) de trois diagonales (3, 4, 18) de l'espace, les dispositifs d'affichage (10, 11, 13, 14) de diagonales (3, 4, 18) de l'espace différentes étant différents, de telle sorte que, dans chaque direction d'observation du boîtier (1), trois des dispositifs d'affichage (10, 11, 13, 14) de signalisation différente sont toujours visibles, qui forment un triplet d'affichage, par exemple pour la mise sous tension et deux états fonctionnels de commutation différents de l'appareil électrique de commutation ou du capteur.

5. Boîtier selon l'une quelconque des revendications 1 à 4,
***caractérisé en ce que***
pour un premier affichage, par exemple pour l'affichage de mise sous tension, ainsi que pour un deuxième affichage, comme l'affichage d'un premier état de commutation, pour un troisième affichage, comme l'affichage d'un deuxième état de commutation, et pour un quatrième affichage, comme l'affichage d'un troisième état de commutation de l'appareil de commutation électrique ou du capteur, le boîtier (1) comprend des dispositifs d'affichage identiques (10-13, 11-14) dans deux coins (10, 11, 12, 13, 14, 15, 16, 17) qui se trouvent sur la même diagonale (3, 4, 18) de quatre diagonales (3, 4, 18) de l'espace, les dispositifs d'affichage (10, 11, 13, 14) de diagonales (3, 4, 18) de l'espace différentes étant différents, de telle sorte que, dans chaque direction d'observation du boîtier (1), quatre des dispositifs d'affichage (10, 11, 13, 14) de signalisation différente sont toujours visibles, qui forment un quadruplet d'affichage, par exemple pour la mise sous tension et trois états fonctionnels de commutation différents de l'appareil électrique de commutation ou du capteur.

6. Boîtier selon l'une quelconque des revendications précédentes,
***caractérisé en ce que***
les dispositifs d'affichage (10-13, 11-14) sont des lampes à incandescence ou des diodes électroluminescentes, qui émettent une lumière de couleur différente et se distinguent ainsi les unes des autres, les dispositifs d'affichage (10-13, 11-14) qui se trouvent sur la même diagonale (3, 4) de l'espace émettant une lumière de même couleur, mais les dispositifs d'affichage (10-13, 11-14) qui se trouvent sur des diagonales (3, 4) de l'espace différentes émettant une lumière de couleur différente.

7. Boîtier selon l'une quelconque des revendications précédentes,
***caractérisé en ce que***
dans le boîtier (1), dans les coins (10, 11, 12, 13, 14, 15, 16, 17) dans lesquels sont placés des dispositifs d'affichage (10-13, 11-14), se trouvent des fenêtres translucides derrières lesquelles est placée à chaque fois une diode électroluminescente (10-13, 11-14) ou une ampoule à incandescence.
